# EUROPÄISCHE PATENTANMELDUNG

(11) **EP 0 931 965 A2**
(43) Veröffentlichungstag der Anmeldung: **28.07.1999**
(21) Anmeldenummer: 99100948.1
(22) Anmeldetag: 20.01.1999
(51) Int. Cl.: F16L 1/12

(54) **Verfahren zum Verlegen von Unterwasserrohrleitung**

(30) Priorität: 26.01.1998 DE 19802834
(71) Anmelder: Ursprung, Heinrich Dipl.-Ing., 83543 Rott am Inn (DE)
(72) Erfinder: Ursprung, Heinrich Dipl.-Ing., 83543 Rott am Inn (DE)
(74) Vertreter: Grünecker, Kinkeldey, Stockmair & Schwanhäusser Anwaltssozietät

(57) **Zusammenfassung**

Die Erfindung betrifft ein Verfahren zum Verlegen einer Unterwasserrohrleitung (1), bei welchem die Leitung zusammen mit einer Vielzahl von Schwimmerelementen (4), die entlang der Unterwasserrohrleitung befestigt sind, schwimmend längs einer Verlegestrecke ausgerichtet und anschließend durch Abtrennen der Schwimmerelemente abgesenkt wird. Zur Steuerung der Sinkgeschwindigkeit beim Absenkvorgang wird eine erste Gruppe von Schwimmerelementen von der Unterwasserrohrleitung unter Belassung einer zweiten Gruppe von Schwimmerelementen abgetrennt, wobei die Schwimmerelemente der ersten Gruppe und die der zweiten Gruppe alternierend an der Unterwasserrohrleitung angeordnet sind und die verbliebenen Schwimmerelemente erst zum endgültigen Absenken auf den Gewässerboden abgetrennt werden.

## Beschreibung

Die Erfindung betrifft ein Verfahren zum Verlegen von Unterwasserrohrleitungen, bei weichem die Leitung zusammen mit einer Vielzahl von Schwimmerelementen, die entlang der Unterwasserrohrleitung befestigt sind, schwimmend längs einer Verlegestrecke ausgerichtet und anschließend durch Abtrennen der Schwimmerelemente abgesenkt wird, gemäß dem Oberbegriff des Anspruchs 1.

Ein solches gattungsgemäßes Verfahren ist aus DE 43 07 922 bekannt. Der Rohrstrang wird zuerst mit Schwimmerelementen verbunden. Dies können z.B. rohrförmige abgeschlossene Körper sein, die parallel zu dem zu verlegenden Rohrstrang mit diesem verbunden werden. Dabei werden die Dimensionen und die Anzahl der Schwimmerelemente so ausgewählt, daß sie den Rohrstrang an der Wasseroberfläche tragen. In diesem Zustand wird der Rohrstrang auf die Wasseroberfläche ausgebracht und entlang der Verlegestrecke ausgerichtet. Durch Abtrennen der Schwimmerelemente wird daraufhin das Auftriebsgewicht der Unterwasserrohrleitung verringert und der Rohrstrang auf diese Weise abgesenkt. Im speziellen bei einem unebenen Gewässerboden kann durch ein zeitlich gesteuertes Abtrennen aufeinanderfolgender Schwimmerelemente verhindert werden, daß zu große Spannungen in der abgesenkten Unterwasserrohrleitung auftreten.

Der Sinkzustand wird also bei diesem Abwurfverfahren durch Lösen der Schwimmerelemente von der Unterwasserrohrleitung eingeleitet. Das Sinkgewicht der sinkenden Leitung stellt sich somit auf das Auftriebsgewicht der gelösten Schwimmerelemente ein, das entsprechend deren Aufgabe, dem sicheren Tragen der Unterwasserrohrleitung wahrend des Ausbringens auf der Gewässeroberflache und des Ausrichtens der Unterwasserrohrleitung, relativ groß ist. Entsprechend groß ist die Sinkgeschwindigkeit beim Abwurf. Eine Korrektur der Ausrichtung der Unterwasserrohrleitung während des Abwurfes ist dabei nur schwierig durchzuführen. Während des Ausrichtvorganges an der Gewässeroberfläche ist der ggf. vorhandene Seeverkehr behindert. Da während des Absenkvorganges Lagekorrekturen schwierig durchzuführen sind, muß der Ausrichtvorgang an der Gewässeroberfläche bei dem gattungsgemäßen Verfahren mit hoher Genauigkeit erfolgen und erfordert dementsprechend eine große Zeitdauer.

Bei der Auswahl der Verlegetrassen ist es beim gattungsgemäßen Verfahren notwendig, die Dimensionen der Leitung und Größe der Bogenwinkel so zu wählen, daß die entstehenden Torsionsmomente während des Abwurfprozesses nicht so groß werden, daß sie nicht über Drill- bzw. Drehwinkel des Rohres innerhalb der zulässigen Torsionsspannung abgetragen werden können, die sich aus den Bogenwinkeln und der Absenkgeschwindigkeit ergeben. Dies erschwert die Anwendung des gattungsgemäßen Verfahrens in topographisch schwierigen Verhältnissen mit unebenen Gewässerböden bzw. engen Verlegekanälen.

Aufgabe der vorliegenden Erfindung ist es ausgehend von diesem Stand der Technik, ein Verlegeverfahren für Unterwasserrohrleitungen anzugeben, bei welchem die Sinkgeschwindigkeit der Unterwasserrohrleitung beim Absinkvorgang gesteuert werden kann.

Diese Aufgabe wird durch ein gattungsgemäßes Verfahren zum Verlegen von Unterwasserrohrleitungen gelöst, das die Merkmale des kennzeichnenden Teiles des Anspruchs 1 hat. Vorteilhatte Ausgestaltungen des Verfahrens sind Gegenstand der Unteransprüche.

Bei dem erfindungsgemäßen Verfahren wird zur Steuerung der Sinkgeschwindigkeit während des Absenkvorganges eine erste Gruppe von Schwimmerelementen von der Unterwasserrohrleitung unter Belassung einer zweiten Gruppe von Schwimmerelementen abgetrennt, wobei die Schwimmerelemente der ersten Gruppe und die der zweiten Gruppe alternierend an der Unterwasserrohrleitung angeordnet sind, und die verbliebenen Schwimmerelemente der zweiten Gruppe erst zum endgültigen Absenken auf den Gewässerboden abgetrennt werden.

Während des Ausbringens auf der Gewässeroberfläche wird die Unterwasserrohrleitung durch die volle Anzahl von Schwimmerelementen getragen. Zum Absenken wird nun eine gewisse Anzahl von Schwimmerelementen in Abständen entlang der Unterwasserrohrleitung abgetrennt. Durch die Anzahl der abgetrennten Schwimmerelemente läßt sich das Sinkgewicht der Unterwasserrohrleitung auf verschiedene Werte einstellen. Auf diese Weise ist eine kontrollierte Einstellung der Sinkgeschwindigkeit möglich. Durch die Auswahl beabstandeter Schwimmerelemente entlang der gesamten Unterwasserrohrleitung, die zur Aufrechterhaltung eines gewissen Auftriebes und damit zur Einstellung einer langsamen Sinkgeschwindigkeit an der Rohrleitung verbleiben, wird gewährleistet, daß die Unterwasserrohrleitung über ihre gesamte Länge gleichmäßig langsam absinkt und keine zu großen Spannungen durch unterschiedliche Absinkgeschwindigkeiten auftreten.

Dabei ist es möglich, daß sich die Schwimmerelemente der ersten und zweiten Gruppe abwechseln oder zwischen je zwei Elementen einer Gruppe zwei oder mehr Elemente der anderen Gruppe liegen. Auf diese Weise lassen sich je nach Anforderung verschiedene Auftriebsgewichte und damit Sinkgeschwindigkeiten realisieren.

Speziell in topographisch schwierigen Verhältnissen kann durch Minderung der Sinkgeschwindigkeit die auftretende Torsionsspannung abgefangen werden, was im speziellen bei achswinkeligen Verlegetrassen von Vorteil ist.

Mit dem erfindungsgemäßen Verfahren ist eine sehr genaue Ausrichtung der Unterwasserrohrleitung entlang der Verlegestrecke bereits an der Wasseroberfläche nicht nötig. Durch das Einstellen einer langsamen Sinkgeschwindigkeit können Korrekturen der Ausrichtung noch während des Sinkvorganges vorgenommen werden. Eine elektronische Beobachtung und Einmessen ist leicht durchführbar. Auf diese Weise ist ggf. vorhandener Seeverkehr während des anfänglichen Ausrichtprozesses an der Wasseroberfläche nur kurze Zeit behindert.

Das erfindungsgemäße Verfahren kann z.B. in einer Weise eingesetzt werden, daß die gesamte Unterwasserrohrleitung sich mit in etwa gleicher Sinkgeschwindigkeit auf den Gewässerboden zubewegt. Ebenso ist es möglich, mit dem erfindungsgemäßen Verfahren einen definierten und langsamen schrägen Absenkvorgang mit einer entsprechenden Abrollbewegung auf dem Gewässerboden zu erreichen.

In einer vorteilhaften Ausgestaltung wird der Sinkgewicht der Unterwasserrohrleitung stufenweise eingestellt, in dem in zeitlichen Abständen jeweils eine Gruppe von Schwimmerelementen abgetrennt wird. Um in geringer Wassertiefe eine geringe Sinkgeschwindigkeit zu erreichen, muß nur eine geringe Anzahl von Schwimmerelementen entlang der gesamten Unterwasserrohrleitung abgetrennt werden. Je tiefer die Unterwasserrohrleitung sinkt, desto höher wird der äußere Wasserdruck. Um eine konstante Sinkgeschwindigkeit aufrechtzuerhalten, müssen in größeren Wassertiefen weitere Schwimmerelemente abgetrennt werden. Durch Abtrennen von Gruppen von Schwimmerelementen, die jeweils über die gesamte Unterwasserrohrleitung beabstandet angeordnet sind, läßt sich also über den gesamten Absinkvorgang hinweg eine kontrollierte Sinkgeschwindigkeit einstellen.

Mit dem erfindungsgemäßen Verfahren kann durch die langsame Sinkgeschwindigkeit auch während des Absenkvorganges eine Lagekorrektur der Unterwasserrohrleitung vorgenommen werden. Ebenso kann Hindernissen ausgewichen werden, die beim Verlegen umgangen werden müssen. Speziell in schwierigen topographischen Verhältnissen, z.B. in Verlegungskanäle oder kurvenreiche Verlegungsstrecken, ist dies von Vorteil. In einer vorteilhaften Weiterbildung des Verfahrens wird zur Durchführung von Lagekorrekturen der Unterwasserrohrleitung eine Sinkgeschwindigkeit von Null eingestellt. Durch entsprechende Auswahl der Anzahl der abzutrennenden Schwimmerelemente läßt sich erreichen, daß die Unterwasserrohrleitung in einer vorbestimmten Wassertiefe zum Stehen kommt, d.h., daß ihr Gewicht gerade durch den Auftrieb ausgeglichen wird. In einem solchen quasi stabilen Zustand ist das nachträgliche Ausrichten der Unterwasserrohrleitung entsprechend den speziellen Gegebenheiten der Verlegestrecke leicht möglich.

Ein Abtrennen der Schwimmerelemente kann z.B. durch Explosionskörper und andere ferngesteuerte Mechanismen erfolgen. Einfacherweise wird das Abtrennen jedoch mit einer Reißleine erreicht. Diese löst die Verbindung zwischen einem Schwimmerelement und der Unterwasserrohrleitung und kann von der Wasseroberfläche aus bedient werden. Ein solches Abtrennen der Schwimmerelemente ist sowohl für die erste Gruppe als auch folgende Gruppen von Schwimmerelementen möglich.

In einer vorteilhaften Ausgestaltung des Verfahrens sind die Schwimmerelemente abgeschlossene Hohlkörper mit einer Wandstärke, die nur über einen begrenzten Zeitraum dem Wasserdruck einer vorbestimmten Tiefe standhält. Die Rohrelemente, die luftgefüllt sind, werden mit größer werdender Wassertiefe einem größeren Wasserdruck ausgesetzt. Die Wandstärke wird so berechnet, daß bei einer vorbestimmten Tiefe, bei der z.B. die Sinkgeschwindigkeit Null durch die entsprechende Anzahl von Schwimmerelementen aufrechterhalten wird, der Hohlkörper des Schwimmer- elementes nur einen begrenzten Zeitraum dem äußeren Wasserdruck standhält. Nach diesem Zeitraum wird der Hohlkörper eingedruckt bzw. gebeult. Das verringert sein Auftriebsgewicht, so daß die Unterwasserrohrleitung wieder ein größeres Sinkgewicht bzw. eine größere Sinkgeschwindigkeit erhält. Dies ermöglicht einen kontrollierten Absenkvorgang, ohne daß zusätzliche mechanische Vorrichtungen vorgesehen sein müssen, um die Schwimmerelemente von der Unterwasserrohrleitung abzutrennen.

In einer weiteren vorteilhaften Ausgestaltung des Verfahrens befindet sich die Unterwasserrohrleitung beim Ausrichten entlang der Verlegestrecke in wellengangsfreier Wassertiefe. Dazu haben die Schwimmerelemente eine Form, die es ermöglicht, verschiedene Tiefen für das Ausbringen der Unterwasserrohrleitung einzustellen. Dies kann z.B. mit langgestreckten Schwimmerelementen erreicht werden, die entweder parallel zu der Unterwasserrohrleitung oder senkrecht dazu in stehender Ausrichtung angeordnet sind, d.h. zwei Einstellungen mit unterschiedlichem Auftrieb ermöglichen

Einfacherweise wird die Sinkgeschwindigkeit der Unterwasserrohrleitung im vorhinein durch entsprechende Versuche ermittelt. Bei dem erfindungsgemäßen Verfahren sind die während des Absenkvorganges an der Unterwasserrohrleitung verbleibenden Schwimmerelemente über die gesamte Unterwasserrohrleitung verteilt. Durch Absenken eines kürzen Stückes der Unterwasserrohrleitung mit einer entsprechend verringerten Anzahl von Schwimmerelementen zu Testzwecken kann dementsprechend der Absenkvorgang der gesamten Unterwasserrohrleitung simuliert werden bzw. die Sinkgeschwindigkeit anhand eines solchen Naturversuchs im vorhinein bestimmt werden.

Das erfindungsgemäße Verfahren läßt sich gleichermaßen für PE-Rohre (Polyethylenrohre) wie für Stahlrohrleitungen einsetzen. Das Abtriebsgewicht kann durch entsprechende Ballastierung bei luftgefüllten Röhren oder aber auch durch Einlaufenlassen von Wasser während des Absenkvorganges erzeugt werden. In vorteilhafter Weise wird das Verfahren zum Absenken von Leitungen eingesetzt, die während des Absenkvorganges luftgefüllt sind und die so mit Ballastgewichten versehen sind, daß sie auch im luftgefüllten Zustand eine ausreichende Auftriebssicherheit aufweisen, d.h., die Gewichte, die an der Leitung befestigt sind und die Leitung am Boden halten, sind so dimensioniert, daß auch bei leerer auf dem Boden liegender Leitung der Auftrieb kleiner als die Gewichtskraft der Ballastgewichte ist. Das erfindungsgemäße Verfahren wird im folgenden anhand der beiliegenden Figuren erläutert.

Dabei zeigt
- Figur 1: eine Unterwasserrohrleitung während des Ausbringvorganges an der Wasseroberfläche und
- Figur 2: eine Unterwasserrohrleitung, die gemäß dem erfindungsgemäßen Verfahren abgesenkt wird.

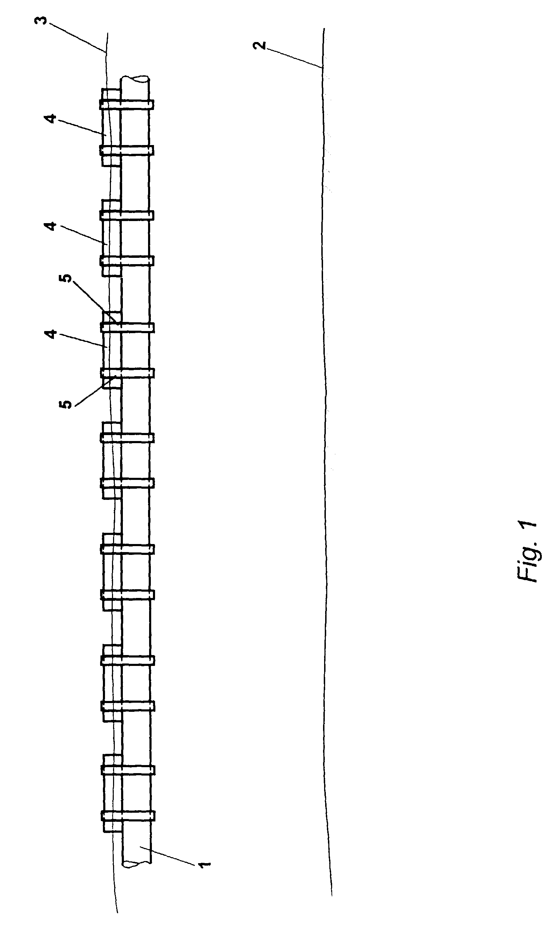

In Figur 1 bezeichnet 1 eine Unterwasserrohrleitung, die mit Schwimmerelementen 4 verbunden ist. Die Schwimmerelemente 4 können z.B. verschlossene Rohrstücke sein, die in vorbestimmten Abständen entlang der Unterwasserrohrleitung 1 angeordnet sind. Die Verbindung wird durch Bandagen 5 aufrechterhalten. Die Unterwasserrohrleitung befindet sich an der Wasseroberfläche 3. 2 bezeichnet den Gewässergrund.

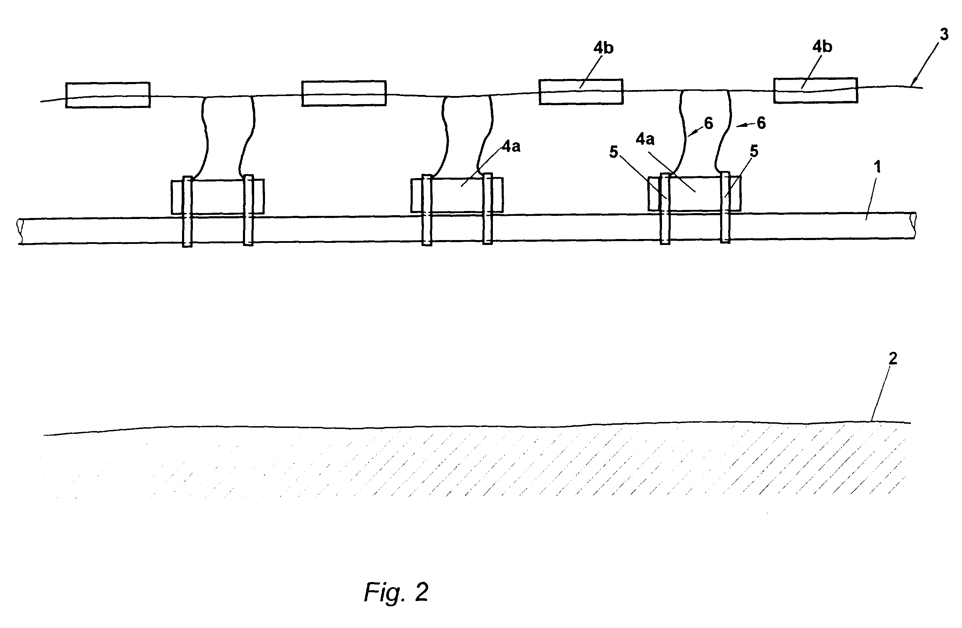

In Figur 2 bezeichnet 4b Schwimmerelemente, die von der Unterwasserrohrleitung t abgetrennt sind und an der Wasseroberfläche 3 schwimmen. Schwimmerelemente 4a sind mit der Unterwasserrohrleitung 1 verbunden. 6 bezeichnet Reißleinen, die mit den Banderolen 5 verbunden sind.

Das erfindungsgemäße Verfahren wird in einer Ausgestaltung wie folgt durchgeführt:

Ein kurzes Rohrstück, das in Durchmesser und Material der Unterwasserrohrleitung entspricht, wird mit einer entsprechenden Anzahl von Schwimmerelementen versehen. Durch Abtrennen einzelner Schwimmerelemente, das entsprechend dem weiter unten beschriebenen Vorgang für die Unterwasserrohrleitung 1 entspricht, wird die Sinkgeschwindigkeit des kurzen Rohrstückes in Abhängigkeit der Anzahl der angebrachten Schwimmerelemente ermittelt. Wird die Anzahl der Schwimmerelemente entsprechend der Länge der gesamten zu verlegenden Unterwasserrohrleitung vervielfacht, so läßt sich aus der Sinkgeschwindigkeit des kurzen Rohrstückes auf die Sinkgeschwindigkeit der gesamten Unterwasserrohrleitung schließen.

Anstelle derartiger Naturversuche kann auch eine theoretische Berechnung zur Feststellung der zu erwartenden Sinkgeschwindigkeit aus dem Gewicht und dem zu erwartenden Auftrieb der Unterwasserrohrleitung 1 mit den Schwimmerelementen dienen.

Zur Einleitung des Absenkvorganges der gesamten Unterwasserrohrleitung 1 wird dieser auf der Gewässeroberfläche 3 ausgebracht.

Sie kann dabei entweder in einzelnen Teilen auf die Wasseroberfläche geschoben werden und dann an der Wasseroberfläche verschweißt werden oder aber als Ganzes auf der Wasseroberfläche ausgebracht werden, wobei jeweils ein Stück am Ufer an die Leitung angeschweißt wird und dann auf die Gewässeroberfläche geschoben wird.

Um die Unterwasserrohrleitung 1 an der Wasseroberfläche 3 zu halten, werden bei der gezeigten Ausführungsform parallel dazu mit Banderolen 5 Schwimmerrohre 4 befestigt. Bei der in der Figur 1 gezeigten Ausgestaltung werden die Schwimmerelemente durch je zwei Banderolen 5 an der Unterwasserrohrleitung 1 gehalten.

Die Unterwasserrohrleitung wird nun entlang der gewünschten Verlegestrecke grob ausgerichtet.

Im folgenden werden über die gesamte Unterwasserrohrleitung im wesentlichen gleich beabstandete Schwimmerelemente 4b von der Unterwasserrohrleitung 1 abgetrennt. Dies kann z.B. durch Reißleinen 6 geschehen, die die Banderolen 5 auftrennen. Dadurch verringert sich der Autfrieb der Unterwasserrohrleitung und sie beginnt zu sinken. Es entsteht ein Zustand, wie er in Figur 2 dargestellt ist. Einzelne in regelmäßigen Abständen beabstandete Schwimmerelemente 4a verbleiben an der Unterwasserrohrleitung 1. Durch entsprechende Auswahl der Anzahl der abgetrennten Schwimmerelemente 4b bzw. des Abstandes der verbleibenden Schwimmerelemente 4a kann eine gewünschte Sinkgeschwindigkeit eingestellt werden. Dementsprechend ist es auch möglich, eine Sinkgeschwindigkeit Null einzustellen. In einem solchen Zustand ist der Auftrieb der Unterwasserrohrleitung 1 mit den noch daran befindlichen Schwimmerelementen 4a gleich dem Gewicht der Anordnung, da der Wasserwiderstand der sich bewegenden Leitung weggefallen ist. In einem solchen Zustand läßt sich eine nachträgliche Korrektur der Lage der Unterwasserrohrleitung entsprechend den tatsächlichen Gegebenheiten des Gewässerbodens 2 auf leichte Weise durchführen. So kann der ursprüngliche Ausrichtvorgang an der Wasseroberfläche 3 verkürzt werden, da dabei eine geringere Genauigkeit eingehalten werden muß. Der Seeverkehr wird also über eine kürzere Zeitdauer hinweg behindert.

Treten während des Absinkvorganges unvorhergesehene Hindernisse, z.B. durch im vorhinein nicht bekannte Felsvorsprünge oder ähnliches auf, so kann durch die langsame Sinkgeschwindigkeit bzw. bei der Sinkgeschwindigkeit Null die Unterwasserrohrleitung um solche Hindernisse leicht in einem Ausweichvorgang herumgeführt werden.

Abtrennen einer weiteren Anzahl von Schwimmerelementen, die in regelmäßigen Abständen über die Unterwasserrohrleitung verteilt sind, erhöht wiederum das Sinkgewicht und damit die Sinkgeschwindigkeit. Die Unterwasserrohrleitung sinkt weiter zu einem Punkt, wo das neue Auftriebsgewicht der Schwerkraft entspricht. Auf diese Weise läßt sich die Unterwasserrohrleitung 1 in Stufen absenken. Die Geschwindigkeit kann dabei je nach Gegebenheiten beliebig langsam eingestellt werden, indem eine entsprechend kleinere Anzahl von Schwimmerelementen 4 gleichzeitig abgetrennt wird.

Sind alle Schwimmerelemente von der Unterwasserrohrleitung 1 entfernt, so sinkt die Unterwasserrohrleitung schließlich vollständig auf den Gewässerboden 2 ab.

Abweichend von der in den Figuren dargestellten Ausgestaltung kann auch vorgesehen sein, daß die Schwimmerrohre eine Wandstärke haben, die nur eine gewisse Zeit lang dem jeweiligen Wasserdruck standhalten. Nach diesem Zeitraum beginnen die Schwimmerrohre zu beulen und verringern auf diese Weise ihren Auftrieb. Die Unterwasserrohrleitung sinkt dementsprechend weiter ab. Durch geeignete Auswahl der Wandstärken läßt sich erreichen, daß verschiedene Schwimmerrohre in verschiedenen Wassertiefen zu beulen beginnen. Auf diese Weise läßt sich ebenso wie in der oben beschriebenen Ausgestaltung des erfindungsgemäßen Verfahrens ein stufenweises Absenken erreichen.

In den Figuren ist ein gerades Stück der Unterwasserrohrleitung 1 dargestellt. Das erfindungsgemäße Verfahren kann aber im speziellen auch vorteilhaft sein, wenn Rohrstränge mit großen Krümmungen entsprechend der vorherrschenden Topographie des Gewässerbodens verlegt werden müssen. Mit dem erfindungsgemäßen Verfahren läßt sich die Sinkgeschwindigkeit so niedrig einregeln, daß die Torsionsmomente, die während des Absenkens auf die Unterwasserrohrleitung 1 speziell in bogenförmigen Bereichen einwirken, gering gehalten werden können.

In Figur 2 ist ein Fall dargestellt, bei welchem die Unterwasserrohrleitung 1 über ihre gesamte Länge mit gleicher Geschwindigkeit in im wesentlichen waagerechten Zustand abgesenkt wird. Das erfindungsgemäße Verfahren ist dabei ebenso vorteilhaft einsetzbar, wenn die Unterwasserrohrleitung 1 schräg abgesenkt wird und auf diese Weise auf dem Gewässerboden zum Abrollen gebracht wird. Auch hier läßt sich eine langsame Absenkgeschwindigkeit bzw. ein quasi stabiler Zustand mit Sinkgeschwindigkeit Null erreichen, indem die Anzahl und der Abstand der in einer ersten Gruppe abgetrennten Schwimmerelemente entsprechend ausgewählt wird.

Das erfindungsgemäße Verfahren ermöglicht einen kontrollierten Absenkvorgang mit einer langsamen Sinkgeschwindigkeit. Je nach Gegebenheit läßt sich auch in verschiedenen Wassertiefen eine Sinkgeschwindigkeit Null erreichen. Auf diese Weise ist ein nachträgliches Ausrichten der zu verlegenden Unterwasserrohrleitung entsprechend der Gegebenheiten leicht durchführbar. Dies ist speziell in topographisch schwierigen Seeverhältnissen von großem Vorteil. Außerdem wird die Zeitdauer, die die Unterwasserrohrleitung an der Wasseroberfläche zum Ausrichten verbringt, verkürzt, was eine eine kürzere Behinderung des Seeverkehrs bedeutet. Durch das gleichmäßige langsame Absenken der Unterwasserrohrleitung, das durch die Auswahl der abzutrennenden Schwimmerelemente entlang der gesamten Unterwasserrohrleitung erreicht wird, werden zu große Spannungen innerhalb der Unterwasserrohrleitung während des Absenkvorganges vermieden.

## Patentansprüche

1. Verfahren zum Verlegen von Unterwasserrohrleitungen, bei welchem die Leitung zusammen mit einer Vielzahl von Schwimmerelementen, die entlang der Unterwasserrohrleitung befestigt sind, schwimmend längs einer Verlegestrecke ausgerichtet und anschließend durch Abtrennen der Schwimmerelemente abgesenkt wird,
**dadurch gekennzeichnet,** daß
zur Steuerung der Sinkgeschwindigkeit beim Absenkvorgang eine erste Gruppe (4b) von Schwimmerelementen (4) von der Unterwasserrohrleitung (1) unter Belassung einer zweiten Gruppe von Schwimmerelementen (4a) abgetrennt wird, wobei die Schwimmerelemente der ersten Gruppe (4b) und der zweiten Gruppe (4a) alternierend an der Unterwasserrohrleitung (1) angeordnet sind, und die verbliebenen Schwimmerlelemente der zweiten Gruppe (4a) erst zum endgültigen Absenken der Unterwasserrohrleitung (1) auf den Gewässerboden (2) abgetrennt werden.

2. Verfahren nach Anspruch 1,
**dadurch gekennzeichnet,** daß
das Sinkgewicht der Unterwasserrohrleitung (1) stufenweise eingestellt wird, indem in zeitlichen Abständen jeweils eine Gruppe von Schwimmerelementen abgetrennt wird.

3. Verfahren nach einem der Ansprüche 1 und 2,
**dadurch gekennzeichnet,** daß
zur Durchführung von Lagekorrekturen der Unterwasserrohrleitung (1) während des Absenkvorganges eine Sinkgeschwindigkeit von Null eingestellt wird.

4. Verfahren nach einem der Ansprüche 1 bis 3,
**dadurchgekennzeichnet,** daß
das Abtrennen der Schwimmerelemente (4) mittels einer Reißleine erfolgt.

5. Verfahren nach einem der Ansprüche 1 bis 4,
**dadurch gekennzeichnet,** daß
die Schwimmerelemente (4) abgeschlossene Hohlköper mit einer Wandstärke sind, die nur über einen begrenzten Zeitraum dem Wasserdruck einer vorbestimmten Tiefe standhält.

6. Verfahren nach einem der Ansprüche 1 bis 5,
**dadurch gekennzeichnet,** daß
sich die Unterwasserrohrleitung (1) beim Ausrichten entlang der Verlegestrecke in wellengangsfreier Wassertiefe befindet.

7. Verfahren nach einem der Ansprüche 1 bis 6,
**dadurch gekennzeichnet,** daß
die Sinkgeschwindigkeit im vorhinein durch entsprechende Versuche ermittelt wird.

8. Verfahren nach einem der Ansprüche 1 bis 7,
**dadurch gekennzeichnet,** daß
die Unterwasserrohrleitung während des Absenkvorganges luftgefüllt ist und mit Ballastgewichten versehen ist, die auch bei abgesenkter Leitung für eine Auftriebssicherheit >1 sorgen.
